# EUROPEAN PATENT SPECIFICATION

(11) **EP 3 575 840 B1**
(45) Date of publication and mention of the grant of the patent: **05.10.2022**
(21) Application number: 17888433.4
(22) Date of filing: 01.12.2017
(51) Int. Cl.: G02B 6/44, A01M 29/30, B63B 21/12, E04H 17/00

(54) **ALL-DIELECTRIC SELF-SUPPORTING OPTICAL CABLE LINE PROTECTIVE DEVICE**
VOLLDIELEKTRISCHE SELBSTTRAGENDE GLASFASERKABELLEITUNGSSCHUTZVORRICHTUNG
DISPOSITIF DE PROTECTION DE LIGNE DE CÂBLE OPTIQUE AUTOPORTEUR TOUT DIÉLECTRIQUE

(30) Priority: 28.12.2016 CN 201611232381
(43) Date of publication of application: 04.12.2019
(73) Proprietor: State Grid Huzhou Power Supply Company, Zhejiang 313000 (CN); State Grid Corporation of China, Beijing 100031 (CN)
(72) Inventor: ZANG, Wei, Huzhou Zhejiang 313000 (CN); WU, Yunpeng, Huzhou Zhejiang 313000 (CN); JIANG, Jianjun, Huzhou Zhejiang 313000 (CN); ZHANG, Li, Huzhou Zhejiang 313000 (CN); SHENG, Jianxiong, Huzhou Zhejiang 313000 (CN); WANG, Huawei, Huzhou Zhejiang 313000 (CN); WEI, Xiaochu, Huzhou Zhejiang 313000 (CN); ZHU, Junhao, Huzhou Zhejiang 313000 (CN)
(74) Representative: 2s-ip Schramm Schneider Bertagnoll Patent- und Rechtsanwälte Part mbB
(86) International application number: PCT/CN2017/114286
(87) International publication number: WO 2018/121179

(56) References cited:
- CN-A- 104 898 244
- CN-A- 104 953 483
- CN-A- 106 772 855
- CN-U- 202 160 570
- CN-U- 206 292 432
- KR-U- 20160 001 573
- US-A- 1 401 540
- US-A- 1 486 417
- US-A- 2 617 378
- US-A- 5 293 721
- US-A- 5 570 652
- US-A1- 2003 009 957
- US-A1- 2008 066 948

## Description

### FIELD

The present disclosure relates to optical cables in power system, and more particularly relates to an ADSS optical cable line protective device.

### BACKGROUND

In the communications net of power system, the ADSS (All-Dielectric Self-Supporting) optical cable is applied to high-voltage transmission lines. The whole optical cable is made of a non-metal medium. Due to its inherent reinforcing member, the ADSS optical cable can withstand its self-weight and external loads; therefore, it has been used in a wide array. The terrains traversed by power transmission lines are complex and variable, for example, they are always erected through mountainous areas and forests. The ADSS optical cable lines hung below power transmission lines are often bitten by small animals such as squirrels and mice in mountains and forests, which not only affects the service life of ADSS optical cable lines, but also affects the operation stability and safety of the overall power grid.

CN 202 160 570 U relates to an optical cable mouse repeller having two semicircle mouse blocking plates that are oppositely arranged to each other with semi-circular grooves.

US 2008/066948 A1 relates to wildlife guard for electrical power distribution and substation facilities having a first and second halves of a hollow cylinder and a shield.

### SUMMARY

The object is to provide an all-dielectric self-supporting ADSS optical cable line protective device, which may effectively prevent animals such as squirrels and mice from climbing and biting, and which can be better adjusted. This object is solved by the device according to claim 1. Advantageous embodiments of the invention are defined in the dependent claims.

Optionally, spines are densely arranged on the arcuate edge of the upper baffle piece and on the arcuate edge of the lower baffle piece.

Optionally, the upper notch and the lower notch are both of U-shape.

Optionally, the upper baffle piece is provided with a plurality of upper through-holes on a verge proximal to the straight-line edge; the lower baffle piece is provided with a plurality of lower through-holes corresponding to the upper through-holes on a verge proximal to the straight-line edge; and the upper baffle piece and the lower baffle piece are securely connected with each other via a fastener.

Optionally, the fastener comprises a bolt and a nut which are fitted with each other.

The upper positioning block and the lower positioning block are both of a semi-cylindric shape, a cross section of the upper groove perpendicular to the length direction of the ADSS optical cable line being of an arc shape, and a cross section of the lower groove perpendicular to the length direction of the ADSS optical cable line being of an arc shape.

The ADSS optical cable line protective device provided by the present disclosure comprises a positioning mechanism and a protective mechanism, thereby having a simple overall structure and a reasonable design. The baffle plate of the protective mechanism is mounted, via a positioning sleeve of the positioning mechanism, to the ADSS optical cable line. Because small animals such as mice and squirrels climb over the baffle plate, they may be effectively prevented from climbing on the ADSS optical cable line, such that they cannot bite and damage the ADSS optical cable line, thereby protecting the ADSS optical cable line.

### BRIEF DESCRIPTION OF THE DRAWINGS

Fig. 1 is a front view of a positioning sleeve in the ADSS optical cable line protective device for preventing damage by animals;
Fig. 2 is a left side view of Fig. 1;
Fig. 3 is sectional view along A-A direction in Fig. 2;
Fig. 4 is a schematic diagram of a baffle plate in the ADSS optical cable line protective device according to an embodiment of the present disclosure;
Fig. 5 is a schematic diagram of mounting the ADSS optical cable protective device to the ADSS optical cable line according to an embodiment of the present disclosure.

In the drawings, 1- ADSS optical cable; 2- positioning sleeve; 21- upper positioning block; 22- lower positioning block; 23 - upper groove; 24 - lower groove; 25- upper positioning part; 26- upper clamping groove; 27 - lower positioning part; 28 - lower clamping groove; 291 - upper limit groove; 292- lower limit groove; 3- baffle plate; 31- upper baffle piece; 32- lower baffle piece; 33- upper notch; 34- lower notch; 35- spine; 36- upper through-hole; 37- lower through-hole; 4- metal pre-stranded layer.

### DETAILED DESCRIPTION OF EMBODIMENTS

Hereinafter, the technical solution of the present disclosure will be illustrated through preferred embodiments in conjunction with the accompanying drawings. It needs to be understood that the oriental or positional relationships indicated by the terms "upper," "lower," "left," "right," "longitudinal," "transverse," "inner," "outer," "vertical," "horizontal," "top," "bottom," etc. are based on the drawings, which are intended only for simplifying description of the present disclosure, not for indicating or implying that the devices/elements have to possess such specific orientations or have to be configured and operated with such specific orientations.

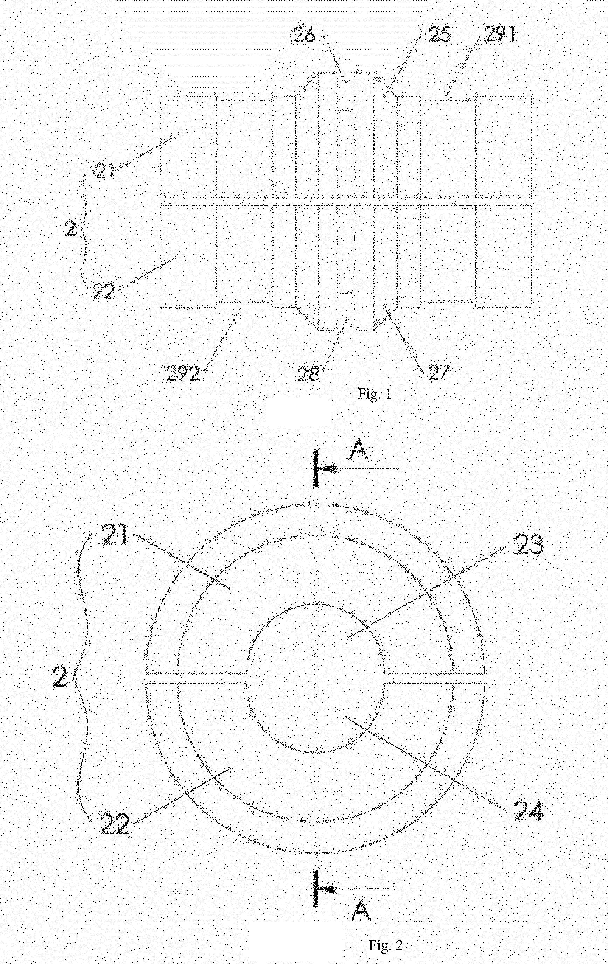

As shown in Figs. 1 to 5, an all-dielectric self-supporting ADSS optical cable line protective device comprises a positioning mechanism and a protective mechanism, wherein the positioning mechanism is arranged on an ADSS optical cable line, and the protective mechanism is arranged on the positioning mechanism. The positioning mechanism comprises a positioning sleeve 2 surrounding the perimeter of the ADSS optical cable line, and the protective mechanism comprises a baffle plate 3 provided on the positioning sleeve.

As shown in Figs. 1, 2 and 3, the positioning sleeve 2 comprises an upper positioning block 21 and a lower positioning block 22, which are oppositely arranged; wherein an upper groove 23 is provided on a surface of the upper positioning block 21 facing the lower positioning block 22 along a length direction of the ADSS optical cable line, the upper groove 23 being through the upper positioning block 21 in the length direction of the ADSS optical cable line; a lower groove 24 is provided on a surface of the upper positioning block 21 facing the upper positioning block 21 along the length direction of the ADSS optical cable line, the lower groove 24 being through the lower positioning block 22 in the length direction of the ADSS optical cable line. In this embodiment, the upper positioning block 21 and the lower positioning block 22 are both of a semi-cylindric shape, a cross section of the upper groove 23 perpendicular to the length direction of the ADSS optical cable line being of an arc shape, and a cross section of the lower groove 24 perpendicular to the length direction of the ADSS optical cable line being of an arc shape.

In the ADSS optical cable line protective device provided by this embodiment, the positioning sleeve has a separated structure; when the positioning sleeve is securely mounted to the perimeter of the ADSS optical cable line, the ADSS optical cable line is clamped between the upper groove and the lower groove, offering a large contact area between the positioning sleeve and the ADSS optical cable line, thereby enhancing mount stability of the positioning sleeve. Additionally, this also facilitates securing the positioning sleeve to the ADSS optical cable line, offering convenience for upgrading the communications net of the power system.

A circle of upper positioning part 25 is provided in the middle portion of the arcuate outer wall of the upper positioning block 21, and the upper positioning part 25 is provided with an upper clamping groove 26 of semi-circular shape along the arcuate perimeter of the upper positioning block 21. A circle of lower positioning part 27 is provided in the middle portion of the arcuate outer wall of the lower positioning block 22, and the lower positioning part 27 is provided with a lower clamping groove 28 of semi-circular shape along the arcuate perimeter of the lower positioning block 22.

The positioning mechanism further comprises a fastening strap for securing the upper positioning block and the lower positioning block. The fastening strap adopts a stainless-steel fastening strap. The arcuate outer wall of the upper positioning block 21 is provided with an upper limit groove 291 at each of the two lateral sides of the upper positioning part 25, and the arcuate outer wall of the lower positioning block 22 is provided with a lower limit groove 291 at each of the two lateral sides of the lower positioning part 27.

In the ADSS optical cable line protective device provided by this embodiment, when the positioning sleeve is mounted to the ADSS optical cable line, the upper positioning block and the lower positioning block are securely connected via the fastening strap, offering a simple securing manner. The outer wall of the upper positioning part is provided with an upper limit groove, and the outer wall of the lower positioning part is provided with a lower limit groove; the fastening strap, after being secured, is clamped between the upper limit groove and the lower limit groove, avoiding the circumstance in which loosening of the positioning sleeve due to long-term service might cause the fastening strap to be detached from the positioning sleeve; in this way, the mounting stability of the positioning sleeve may be improved, and the overall use safety of the protective device may be enhanced.

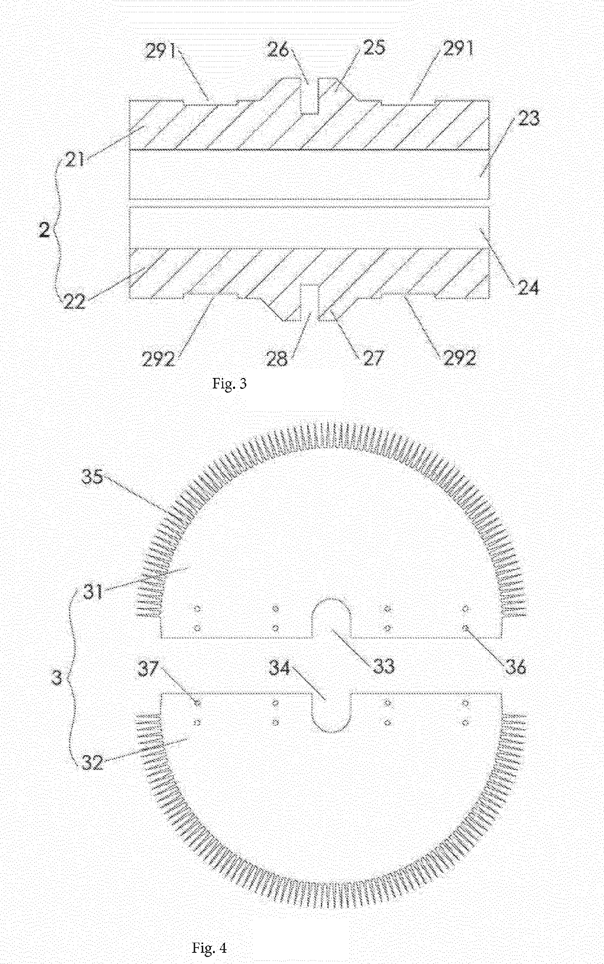

As shown in Fig. 4, the baffle plate 3 comprises an upper baffle piece 31 and a lower baffle piece 32, which are both of semi-circular shape, the upper baffle piece 31 being provided with an upper notch 33 at the circle center, and the lower baffle piece 32 being provided with a lower notch 34 at the circle center. In this embodiment, both of the upper notch 33 and the lower notch 34 have a U shape; spines 35 are densely arranged on the arcuate edge of the upper baffle piece 31 and on the arcuate edge of the lower baffle piece 32.

In the ADSS optical cable line protective device according to this embodiment, the baffle plate adopts a separated structure; when the baffle plate is mounted to the positioning sleeve, the upper baffle piece and the lower baffle piece are clamped, via the upper notch and the lower notch, into an annular clamping groove which is formed by the upper clamping groove and the lower clamping groove, thereby avoiding random displacement of the upper baffle piece and the lower baffle piece along the length direction of the positioning sleeve, and then enhancing mounting stability of the baffle plate. Moreover, dense spines are arranged on the outer arcuate edge of the upper baffle piece and on the outer arcuate edge of the lower baffle piece, thereby preventing small animals in mountains and forests from climbing over the baffle plate and then enhancing use effect of the protective device.

The upper baffle piece 31 and the lower baffle piece 32 are secured via a fastener, the fastener including a bolt and a nut which are fitted to each other. A plurality of upper through-holes 36 are provided on a verge proximal to the straight-line edge of the upper baffle piece 31, and a plurality of lower through-holes 37 corresponding to the upper through-holes 36 are provided on a verge proximal to the straight-line edge of the lower baffle piece 32.

In the ADSS optical cable line protective device provided by this embodiment, upper through-holes are provided on the upper baffle piece, and lower through-holes are provided on the lower baffle piece; the upper baffle piece and the lower baffle piece are securely connected via the bolt and nut which are fitted to each other; in this way, the structure for the upper baffle piece and the lower baffle piece is simplified, and the simple connection structure between the upper baffle piece and the lower baffle piece facilitates fixation.

In this embodiment, the upper positioning block and the lower positioning block are both of semi-cylindric shape. The axial cross sections of the upper groove and the lower groove perpendicular to the positioning sleeve are both of a semi-circle shape, and the upper notch and the lower notch have a U shape. This structure may effectively enhance the mounting stability of the protective device as a whole, thereby ensuring use effect.

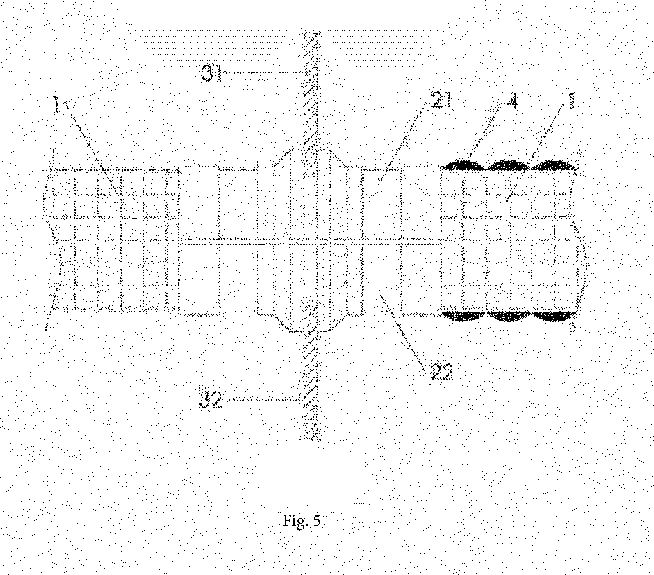

As shown in Fig. 5, upon mounting, the positioning sleeve 2 is first secured to an end of the ADSS optical cable 1 proximal to the tower; the upper positioning block 21 and the lower positioning block 22 are secured to the perimeter of the ADSS optical cable 1 via the fastening strap; the ADSS optical cable 1 is located in a hole formed jointly by the upper groove 23 and the lower groove 24, and the fastening strap is located in the upper limit groove 291 and the lower limit groove 292. When the baffle plate 3 is mounted on the positioning sleeve 2, the upper notch 33 of the upper baffle piece 31 and the lower notch 34 of the lower baffle piece 82 are clamped in the clamping groove jointly formed by the upper clamping groove 26 and the lower clamping groove 28; the upper baffle piece 31 and the lower baffle piece 32 are securely connected via a fastener.

The ADSS optical cable 1 between the tower and the positioning sleeve 2 is cladded outside with a metal pre-stranded wire layer 4, such that the small animals such as the squirrels and mice in the mountains and forests cannot damage them by biting; besides, the small animals climb over the baffle plate 3 to climb to the ADSS optical cable 1 which is not cladded with the metal pre-stranded wire layer; in this way, the small animals may be prevented from biting.

## Claims

1. An all-dielectric self-supporting ADSS optical cable line protective device comprising
a positioning mechanism (2; 21, 22) and a protective mechanism (3; 31, 32), wherein the positioning mechanism (2; 21, 22) is to be arranged on an ADSS optical cable line, and the protective mechanism (3; 31, 32) is to be arranged on the positioning mechanism (2; 21, 22);
the positioning mechanism (2; 21, 22) comprising a positioning sleeve (2) surrounding the perimeter of the ADSS optical cable line, and
the protective mechanism comprising a baffle plate (3) to be provided on the positioning sleeve (2),
the positioning sleeve (2) comprising an upper positioning block (21) and a lower positioning block (22), which are to be oppositely arranged, wherein
an upper groove (23) is provided on a surface of the upper positioning block (21) facing the lower positioning block (22) along a length direction of the ADSS optical cable line, the upper groove (23) being through the upper positioning block (21) in the length direction of the ADSS optical cable line; and
a lower groove (24) is provided on a surface of the lower positioning block (22) facing the upper positioning block (21) along the length direction of the ADSS optical cable line, the lower groove (24) being through the lower positioning block (22) in the length direction of the ADSS optical cable line,
an upper positioning part (25) being provided on a side wall of the upper positioning block (21) distant from the lower positioning block (22),
the upper positioning part (25) being provided with an upper clamping groove (26) along the perimeter of the upper positioning block (21);
a lower positioning part (27) being provided on a side wall of the lower positioning block (22) distant from the upper positioning block (21),
the lower positioning part (27) being provided with a lower clamping groove (28) along the perimeter of the lower positioning block (22),
wherein
the positioning mechanism (2; 21, 22) further comprises a fastening strap for securing the upper positioning block (21) and the lower positioning block (22),
two lateral portions of the upper positioning part (25) being each provided with an upper limit groove (291), and two lateral portions of the lower positioning part (27) being each provided with a lower limit groove (292),
wherein when the positioning sleeve (2) is mounted to the ADSS optical cable line, the upper positioning block (21) and the lower positioning block (22) are securely connected via the fastening strap, the fastening strap, after being secured, being clamped between the upper limit groove (291) and the lower limit groove (292), and
wherein the upper positioning block (21) and the lower positioning block (22) are both of a semi-cylindric shape, a cross section of the upper groove (23) perpendicular to the length direction of the ADSS optical cable line being of an arc shape, and a cross section of the lower groove (24) perpendicular to the length direction of the ADSS optical cable line being of an arc shape; and
wherein the baffle plate (3) comprises an upper baffle piece (31) and a lower baffle piece (32), which are both of semi-circular shape, the upper baffle piece (31) being provided with an upper notch (33) at the circle center, and the lower baffle piece (32) being provided with a lower notch (34) at the circle center, and
when the baffle plate (3) is mounted to the positioning sleeve (2), the upper baffle piece (31) and the lower baffle piece (32) are clamped, via the upper notch (33) and the lower notch (34), into an annular clamping groove which is formed by the upper clamping groove (26) and the lower clamping groove (28).

2. The device according to claim 1, wherein spines are densely arranged on the arcuate edge of the upper baffle piece and an arcuate edge of the lower baffle piece.

3. The device according to claim 1 or 2, wherein the upper notch (33) and the lower notch (34) are both of U-shape.

4. The device according to claim 3, wherein the upper baffle piece (31) is provided with a plurality of upper through-holes (36) on a verge proximal to a straight-line edge; the lower baffle (32) piece is provided with a plurality of lower through-holes (37) corresponding to the upper through-holes (36) on a verge proximal to a straight-line edge; and the upper baffle piece (31) and the lower baffle piece (32) are securely connected with each other via a fastener.

5. The device according to claim 1, wherein the fastener comprises a bolt and a nut which are fitted with each other.

## Patentansprüche

1. Schutzvorrichtung einer vollständig dielektrischen selbsttragenden ADDS-optischen Kabelleitung, umfassend
einen Positionierungsmechanismus (2; 21, 22) und einen Schutzmechanismus (3; 31, 32), wobei der Positionierungsmechanismus (2; 21, 22) an einer optischen ADSS-Kabelleitung anzuordnen ist, und der Schutzmechanismus (3; 31, 32) an dem Positionierungsmechanismus (2; 21, 22) anzuordnen ist;
der Positionierungsmechanismus (2; 21, 22) umfassend eine Positionierungshülse (2), die den Umfang der optischen ADSS-Kabelleitung umgibt, und
der Schutzmechanismus umfassend eine Prallplatte (3), die an der Positionierungshülse (2) bereitzustellen ist,
die Positionierungshülse (2) umfassend einen oberen Positionierungsblock (21) und einen unteren Positionierungsblock (22), die gegenüberliegend anzuordnen sind, wobei
eine obere Nut (23) auf einer Oberfläche des oberen Positionierungsblocks (21) bereitgestellt ist, die dem unteren Positionierungsblock (22) entlang einer Längenrichtung der optischen ADSS-Kabelleitung zugewandt ist, wobei die obere Nut (23) durch den oberen Positionierungsblock (21) in der Längenrichtung der optischen ADSS-Kabelleitung verläuft; und
eine untere Nut (24) auf einer Oberfläche des unteren Positionierungsblocks (22) bereitgestellt ist, die dem oberen Positionierungsblock (21) entlang der Längenrichtung der optischen ADSS-Kabelleitung zugewandt ist, wobei die untere Nut (24) durch den unteren Positionierungsblock (22) in der Längenrichtung der optischen ADSS-Kabelleitung verläuft,
ein oberes Positionierungsteil (25) an einer Seitenwand des oberen Positionierungsblocks (21) entfernt von dem unteren Positionierungsblock (22) bereitgestellt ist,
das obere Positionierungsteil (25) entlang des Umfangs des oberen Positionierungsblocks (21) mit einer oberen Klemmnut (26) versehen ist;
ein unteres Positionierungsteil (27) an einer Seitenwand des unteren Positionierungsblocks (22) entfernt von dem oberen Positionierungsblock (21) bereitgestellt ist,
das untere Positionierungsteil (27) entlang des Umfangs des unteren Positionierungsblocks (22) mit einer unteren Klemmnut (28) versehen ist,
wobei:
der Positionierungsmechanismus (2; 21, 22) ferner einen Befestigungsriemen zum Sichern des oberen Positionierungsblocks (21) und des unteren Positionierungsblocks (22) umfasst,
zwei seitliche Abschnitte des oberen Positionierungsteils (25) jeweils mit einer oberen Grenznut (291) versehen sind, und zwei seitliche Abschnitte des unteren Positionierungsteils (27) jeweils mit einer unteren Grenznut (292) versehen sind,
wobei, wenn die Positionierungshülse (2) an der optischen ADSS-Kabelleitung montiert ist, der obere Positionierungsblock (21) und der untere Positionierungsblock (22) über den Befestigungsriemen sicher verbunden sind, wobei der Befestigungsriemen nach dem Sichern zwischen die obere Grenznut (291) und die untere Grenznut (292) geklemmt wird, und
wobei der obere Positionierungsblock (21) und der untere Positionierungsblock (22) beide eine halbzylindrische Form aufweisen, ein Querschnitt der oberen Nut (23) senkrecht zu der Längenrichtung der optischen ADSS-Kabelleitung eine Bogenform aufweist, und ein Querschnitt der unteren Nut (24) senkrecht zu der Längenrichtung der optischen ADSS-Kabelleitung eine Bogenform aufweist; und
wobei die Prallplatte (3) ein oberes Prallstück (31) und ein unteres Prallstück (32) umfasst, die beide eine Halbkreisform aufweisen, das obere Prallstück (31) mit einer oberen Kerbe (33) in der Kreismitte versehen ist und das untere Prallstück (32) mit einer unteren Kerbe (34) in der Kreismitte versehen ist, und
wenn die Prallplatte (3) an der Positionierungshülse (2) montiert ist, das obere Prallstück (31) und das untere Prallstück (32), über die obere Kerbe (33) und die untere Kerbe (34), in eine ringförmige Klemmnut geklemmt werden, die durch die obere Klemmnut (26) und die untere Klemmnut (28) ausgebildet wird.

2. Vorrichtung nach Anspruch 1, wobei Stacheln dicht an der bogenförmigen Kante des oberen Prallstücks und an einer bogenförmigen Kante des unteren Prallstücks angeordnet sind.

3. Vorrichtung nach Anspruch 1 oder 2, wobei die obere Kerbe (33) und die untere Kerbe (34) beide U-förmig sind.

4. Vorrichtung nach Anspruch 3, wobei das obere Prallstück (31) mit einer Vielzahl von oberen Durchgangslöchern (36) an einem Rand nahe einer geradlinigen Kante versehen ist; das untere Prall(32)stück mit einer Vielzahl von unteren Durchgangslöchern (37) versehen ist, die den oberen Durchgangslöchern (36) an einem Rand nahe einer geradlinigen Kante entsprechen; und das obere Prallstück (31) und das untere Prallstück (32) über ein Befestigungselement sicher miteinander verbunden sind.

5. Vorrichtung nach Anspruch 1, wobei das Befestigungselement einen Bolzen und eine Mutter umfasst, die miteinander verbunden sind.

## Revendications

1. Dispositif de protection de ligne de câble optique tout diélectrique autoportant ADSS comprenant
un mécanisme de positionnement (2 ; 21, 22) et un mécanisme de protection (3 ; 31, 32), dans lequel le mécanisme de positionnement (2 ; 21, 22) doit être disposé sur une ligne de câble optique ADSS, et le mécanisme de protection (3 ; 31, 32) doit être disposé sur le mécanisme de positionnement (2 ; 21, 22) ;
le mécanisme de positionnement (2 ; 21, 22) comprenant un manchon de positionnement (2) entourant le périmètre de la ligne de câble optique ADSS, et
le mécanisme de protection comprenant une plaque déflectrice (3) à prévoir sur le manchon de positionnement (2),
le manchon de positionnement (2) comprenant un bloc de positionnement supérieur (21) et un bloc de positionnement inférieur (22), qui doivent être disposés de manière opposée, dans lequel
une rainure supérieure (23) est prévue sur une surface du bloc de positionnement supérieur (21) faisant face au bloc de positionnement inférieur (22) le long d'une direction longitudinale de la ligne de câble optique ADSS, la rainure supérieure (23) passant à travers le bloc de positionnement supérieur (21) dans la direction longitudinale de la ligne de câble optique ADSS ; et
une rainure inférieure (24) est prévue sur une surface du bloc de positionnement inférieur (22) faisant face au bloc de positionnement supérieur (21) le long de la direction longitudinale de la ligne de câble optique ADSS, la rainure inférieure (24) passant à travers le bloc de positionnement inférieur (22) dans la direction longitudinale de la ligne de câble optique ADSS,
une partie de positionnement supérieure (25) étant prévue sur une paroi latérale du bloc de positionnement supérieur (21) à distance du bloc de positionnement inférieur (22),
la partie de positionnement supérieure (25) étant pourvue d'une rainure de serrage supérieure (26) le long du périmètre du bloc de positionnement supérieur (21) ;
une partie de positionnement inférieure (27) étant prévue sur une paroi latérale du bloc de positionnement inférieur (22) à distance du bloc de positionnement supérieur (21),
la partie de positionnement inférieure (27) étant pourvue d'une rainure de serrage inférieure (28) le long du périmètre du bloc de positionnement inférieur (22),
dans lequel
le mécanisme de positionnement (2 ; 21, 22) comprend en outre une sangle de fixation permettant d'attacher le bloc de positionnement supérieur (21) et le bloc de positionnement inférieur (22),
deux parties latérales de la partie de positionnement supérieure (25) étant chacune pourvue d'une rainure de limitation supérieure (291), et deux parties latérales de la partie de positionnement inférieure (27) étant chacune pourvue d'une rainure de limitation inférieure (292),
dans lequel, lorsque le manchon de positionnement (2) est monté sur la ligne de câble optique ADSS, le bloc de positionnement supérieur (21) et le bloc de positionnement inférieur (22) sont solidement reliés par l'intermédiaire de la sangle de fixation, la sangle de fixation, après avoir été attachée, étant serrée entre la rainure de limitation supérieure (291) et la rainure de limitation inférieure (292), et
dans lequel le bloc de positionnement supérieur (21) et le bloc de positionnement inférieur (22) sont tous deux de forme semi-cylindrique, une section transversale de la rainure supérieure (23) perpendiculaire à la direction longitudinale de la ligne de câble optique ADSS étant en forme d'arc, et une section transversale de la rainure inférieure (24) perpendiculaire à la direction longitudinale de la ligne de câble optique ADSS étant en forme d'arc ; et
dans lequel la plaque déflectrice (3) comprend une pièce déflectrice supérieure (31) et une pièce déflectrice inférieure (32), qui sont toutes deux de forme semi-circulaire, la pièce déflectrice supérieure (31) étant pourvue d'une encoche supérieure (33) au centre du cercle, et la pièce déflectrice inférieure (32) étant pourvue d'une encoche inférieure (34) au centre du cercle, et
lorsque la plaque déflectrice (3) est montée sur le manchon de positionnement (2), la pièce déflectrice supérieure (31) et la pièce déflectrice inférieure (32) sont serrées, par l'intermédiaire de l'encoche supérieure (33) et de l'encoche inférieure (34), dans une rainure de serrage annulaire qui est formée par la rainure de serrage supérieure (26) et la rainure de serrage inférieure (28).

2. Dispositif selon la revendication 1, dans lequel des épines sont disposées de manière dense sur la bordure arquée de la pièce déflectrice supérieure et une bordure arquée de la pièce déflectrice inférieure.

3. Dispositif selon la revendication 1 ou 2, dans lequel l'encoche supérieure (33) et l'encoche inférieure (34) sont toutes deux en forme de U.

4. Dispositif selon la revendication 3, dans lequel la pièce déflectrice supérieure (31) est pourvue d'une pluralité de trous traversants supérieurs (36) sur un bord proximal à une bordure en ligne droite ; la pièce déflectrice inférieure (32) est pourvue d'une pluralité de trous traversants inférieurs (37) correspondant aux trous traversants supérieurs (36) sur un bord proximal à une bordure en ligne droite ; et la pièce déflectrice supérieure (31) et la pièce déflectrice inférieure (32) sont solidement reliées l'une à l'autre par l'intermédiaire d'une fixation.

5. Dispositif selon la revendication 1, dans lequel la fixation comprend un boulon et un écrou qui sont ajustés l'un avec l'autre.
